(19) Europäisches Patentamt
European Patent Office
Office européen des brevets

(11) Veröffentlichungsnummer: **0 312 838 B1**

(12) **EUROPÄISCHE PATENTSCHRIFT**

(45) Veröffentlichungstag der Patentschrift: **29.09.93**

(51) Int. Cl.[5]: **C09B 29/52**, C09B 35/03, D21H 21/28, D21H 19/00

(21) Anmeldenummer: **88116528.6**

(22) Anmeldetag: **06.10.88**

(54) **Basische Azofarbstoffe, ihre Herstellung und Verwendung.**

(30) Priorität: **17.10.87 DE 3735276**

(43) Veröffentlichungstag der Anmeldung:
**26.04.89 Patentblatt 89/17**

(45) Bekanntmachung des Hinweises auf die Patenterteilung:
**29.09.93 Patentblatt 93/39**

(84) Benannte Vertragsstaaten:
**CH DE FR GB LI**

(56) Entgegenhaltungen:
**DE-A- 3 434 922**
**DE-A- 3 434 923**
**US-A- 4 285 861**

(73) Patentinhaber: **BAYER AG**

**D-51368 Leverkusen(DE)**

(72) Erfinder: **Engel, Aloysius, Dr.**
**Am Brungen 17**
**D-5090 Leverkusen 3(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind basische Azofarbstoffe der allgemeinen Formel

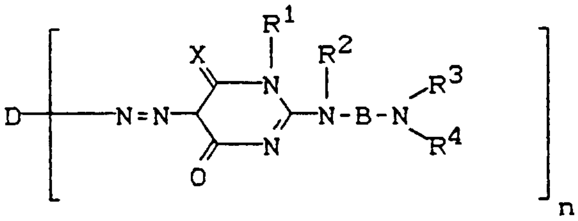

(I)

und deren Tautomere,
worin

D der Rest einer von anionischen Gruppen freien Diazo- oder Tetrazokomponente,
X O oder NH,
$R^1$, $R^2$ unabhängig voneinander Wasserstoff, Alkyl oder Aryl,
B für gegenbenenfalls durch -O-, -S-,

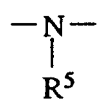

unterbrochenes $C_2$-$C_4$-Alkylen,
worin
$R_5$ für Wasserstoff, Methyl, gegebenenfalls durch Chlor, Brom, Hydroxy, Cyan, $C_1$-$C_4$-Alkoxy, Amino, Mono- und Di-$C_1$-$C_4$-alkylamino substituiertes $C_2$-$C_4$-Alkyl, durch Fluor, Chlor, Brom, $C_1$-$C_4$-Alkyl, $C_1$-$C_4$-Alkoxy substituiertes Aryl, vorzugsweise Phenyl steht,
oder
B für $-CH_2CH_2CH_2-NH-CH_2CH_2CH_2-$ oder

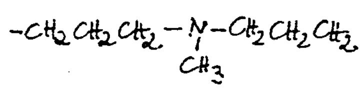

steht,
oder
B für einen Rest der Formel

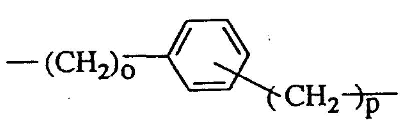

worin
o für 0, 1, 2 oder 3 und
p für 1, 2 oder 3 steht und

$$-(CH_2)_p-$$

an den Rest $NR^3R^4$ gebunden ist,

und der Phenylrest zusätzlich durch $C_1$-$C_4$-Alkyl, $C_1$-$C_4$-Alkoxy, Chlor oder Brom substituiert sein kann,

$R^3$, $R^4$ unabhängig voneinander Wasserstoff, Alkyl, Alkenyl oder Aralkyl sind, oder

$R^2$ und $R^3$ zusammen mit B und den beiden Stickstoffatomen, an die sie gebunden sind, einen 5- oder 6-gliedrigen Heterocyclus bilden, und in diesem Fall B auch für eine direkte Bindung, $-CH_2-$ oder $-CH_2-CH_2-$ steht,

$R^3$ und $R^4$ gemeinsam mit dem Stickstoffatom, an das sie gebunden sind, einen 5- oder 6-gliedrigen Heterocyclus bilden,

n 1 oder 2 sind, und worin

die cyclischen und acyclischen Reste ihrerseits durch in der Farbstoffchemie übliche Reste substituiert sein können, sowie ihre Herstellung und ihre Verwendung zum Färben von synthetischen und natürlichen mit basischen Farbstoffen färbbaren Materialien.

D steht insbesondere für eine Mono- oder Bisdiazokomponente der Benzol-, Naphthalin- oder heteroaromatischen Reihe.

Unter Alkylresten werden insbesondere solche mit 1-8 C-Atomen verstanden und unter Alkenylresten solche mit 2-4 C-Atomen.

Substituenten der Alkyl- und Arylreste sind beispielsweise Halogen, vorzugsweise Fluor, Chlor oder Brom, Hydroxy, $C_1$-$C_4$-Alkoxy, Cyan, Amino, Mono- und Di-$C_1$-$C_4$-alkylamino. Die Arylreste können zusätzlich durch $C_1$-$C_4$-Alkyl substituiert sein.

Aryl steht vorzugsweise für Phenyl.

Vorzugsweise steht Aralkyl für Benzyl oder Phenylethyl, die beispielsweise im Phenylkern durch Fluor, Chlor, Brom, $C_1$-$C_4$-Alkyl, $C_1$-$C_4$-Alkoxy, Nitro, Cyan, Amino, Mono- und Di-$C_1$-$C_4$-alkylamino substituiert sein können.

Von den Farbstoffen der Formel (I) sind die Farbstoffe der Formel

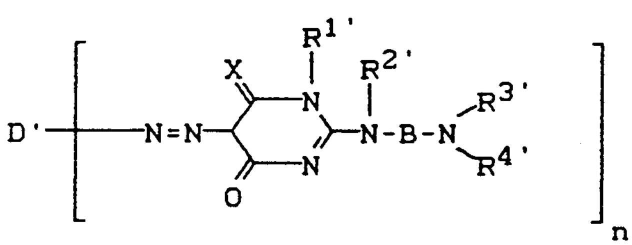

(II)

bevorzugt, worin

n 1 oder 2 ist,

X O oder NH,

D' einen Rest der Formel

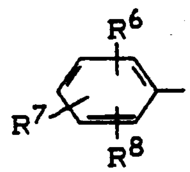

bedeutet, für den Fall, daß n = 1 ist

oder einen Rest der Formel

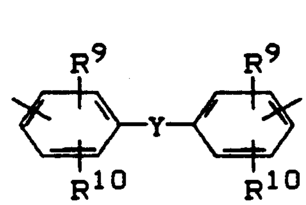

bedeutet, für den Fall, daß n = 2 ist,
worin

| | |
|---|---|
| $R^6$ und $R^7$ | unabhängig voneinander Wasserstoff, $C_1$-$C_4$-Alkyl, $C_1$-$C_4$-Alkoxy, Fluor, Chlor, Brom, durch Amino-, Mono- oder Di-$C_1$-$C_4$-alkylamino substituiertes $C_2$-$C_4$-Alkyl, $CONHR^{11}$ oder $SO_2NHR^{11}$ |
| $R^{11}$ | $C_1$-$C_4$-Alkyl, durch Amino-, Mono- oder Di-$C_1$-$C_4$-alkylamino , N-Pyrrolidin , N-Morpholin , N-Piperazin , N-Hexahydropyridazin , N-Hexahydropyrimidin substituiertes $C_2$-$C_4$-Alkyl sind, |
| $R^8$ | unabhängig von $R^6$ und $R^7$ die dafür angegebene Bedeutung hat oder einen Rest der Formel |

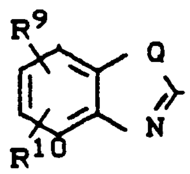
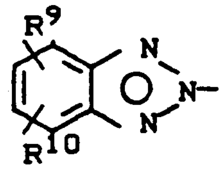
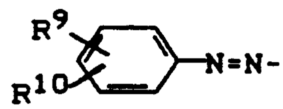

| | |
|---|---|
| $R^9$ und $R^{10}$ | unabhängig voneinander Wasserstoff, $C_1$-$C_4$-Alkyl, $C_1$-$C_4$-Alkoxy, Chlor oder Brom sind, |
| Q | für O, S, NH und |
| Y | für eine direkte Bindung oder -CONH-, -CO-, -NHCONH-, $-CH_2-$, $-CH_2CH_2-$, -CH=CH-, $-C(CH_3)_2-$, |

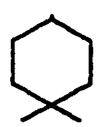 ,

-O-, -S-, -NH-, >N-$C_1$-$C_4$-Alkyl, -N=N-, -NHCOCH=CHCONH-, $NHCOCH_2CH_2CONH$-,

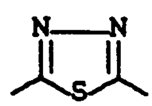 , 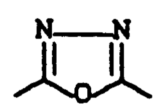

stehen,

| | |
|---|---|
| $R^{1'}$ und $R^{2'}$ | unabhängig voneinander Wasserstoff, gegebenenfalls durch Halogen, vorzugsweise Fluor, Chlor oder Brom, durch Hydroxy, $C_1$-$C_4$-Alkoxy, Cyan, Amino, Mono oder Di-$C_1$-$C_4$-alkylamino substituiertes $C_1$-$C_4$-Alkyl, durch Fluor, Chlor, Brom, $C_1$-$C_4$-Alkyl, $C_1$-$C_4$-Alkoxy substituiertes Aryl, vorzugsweise Phenyl, sind |
| $R^{3'}$ und $R^{4'}$ | unabhängig voneinander Wasserstoff, $C_1$-$C_4$-Alkyl, $C_3$- oder $C_4$-Alkenyl, Benzyl oder Phenylethyl sind, die durch Hydroxy, $C_1$-$C_4$-Alkoxy, Chlor, Brom oder Cyan und der Benzyl- und Phenylethylrest zusätzlich durch $C_1$-$C_4$-Alkyl substituiert sein können, sind, oder |
| $R^{2'}$ und $R^{3'}$ | zusammen mit B und den beiden Stickstoffatomen, an die sie gebunden sind, falls B für eine direkte Bindung steht, einen durch $C_1$-$C_4$-alkylsubstituierten Hexahydropyridazinring, falls B für $-CH_2-$ steht, einen durch $C_1$-$C_4$-alkylsubstituierten Hexahydropyrimidinring oder falls B für $-CH_2CH_2-$steht, einen durch $C_1$-$C_4$-alkylsubstiutierten Piperazinring bilden, oder |
| $R^{3'}$ und $R^{4'}$ | zusammen mit dem Stickstoffatom, an das sie gebunden sind, einen gegebenenfalls durch $C_1$-$C_4$-alkylsubstituierten Pyrrolidin-, Piperidin-, Morpholin-, Hexahydropyridazin-, Hexahydropyrimidin-oder Piperazinring bilden, wobei die Alkylsubstituenten zusätzlich durch Chlor, Brom, Hydroxy, Cyan, Amino, Mono- oder Di-$C_1$-$C_4$-alkylamino substituiert |

sein können,

B die oben angegebene Bedeutung hat.

Als B kommen beispielsweise in Betracht:

direkte Bindung oder $-CH_2-$ für den Fall, daß $R^{2'}$ und $R^{3'}$ zusammen mit B und den beiden Stickstoffatomen, an die sie gebunden sind, einen Hexahydropyridazin- oder Hexahydropyrimidinring bilden; $-CH_2CH_2-$, $-CH_2CH_2CH_2-$, $-CH_2CH_2-NHCH_2CH_2-$,

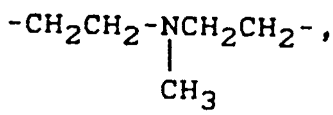

$-CH_2CH_2CH_2-NH-CH_2CH_2CH_2-$,

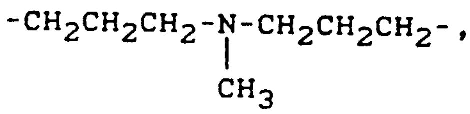

$-CH(CH_3)CH_2-$, $-CH_2CH_2CH_2CH_2-$,

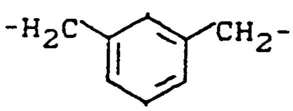 , 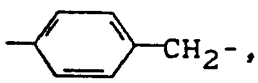 , 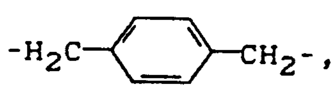 ,

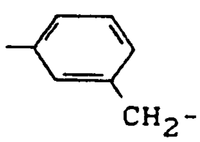 ,

wobei die freie Bindung am Phenylrest an $N-R^{2'}$ gebunden ist.

Von den Farbstoffen der Formel (II) werden besonders die Farbstoffe der Formel

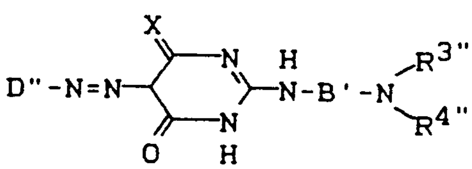 (III)

bevorzugt, worin

D″ einen Rest der Formel

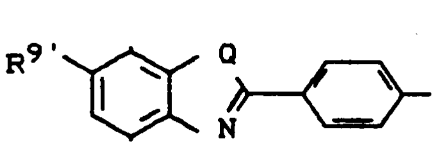 , 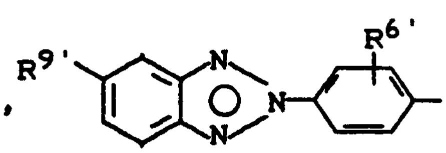 oder

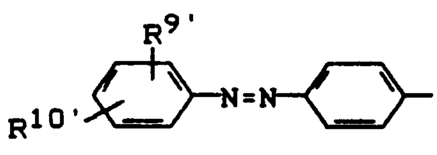

| | |
|---|---|
| $R^{6'}$, $R^{9'}$ und $R^{10'}$ | unabhängig voneinander Wasserstoff, Chlor, Brom, Methoxy, Ethoxy, Methyl oder Ethyl sind, |
| $R^{3''}$ und $R^{4''}$ | unabhängig voneinander $C_1$-$C_4$-Alkyl, $\beta$- oder $\gamma$-Hydroxy-$C_2$-$C_4$-alkyl oder Benzyl bedeuten, oder |
| $R^{3''}$ und $R^{4''}$ | zusammen mit dem Stickstoffatom, an das sie gebunden sind, einen Pyrrolidin-, Morpholin-, Piperidin- oder Piperazinring bilden, dessen terminales Stickstoffatom zusätzlich durch $\beta$-Hydroxyethyl substituiert sein kann, |
| B′ | $-CH_2CH_2-$, $CH_2CH_2CH_2-$, $-CH(CH_3)CH_2-$, $-CH_2CH_2CH_2CH_2-$, |
| X | O oder NH und |
| Q | O, S oder NH |

bedeuten.

Bevorzugte Farbstoffe der Formel (I) sind weiterhin Farbstoffe der allgemeinen Formel

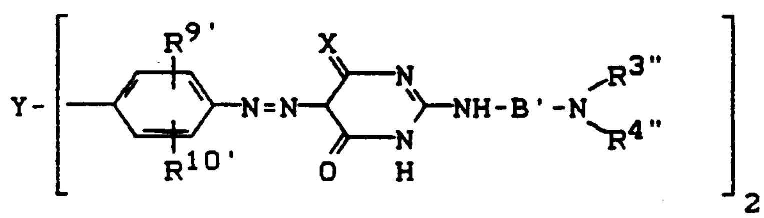

(IV)

worin

$R^{3''}$ $R^{4''}$, $R^{9'}$, $R^{10'}$, B′, X und Y die oben angegebene Bedeutung

haben.

Die Farbstoffe der allgemeinen Formel (I) werden durch Diazotieren der Amine der Formel

$D-(NH_2)_n$ (V)

und Kupplung mit den Iminobarbitursäuren der Formel

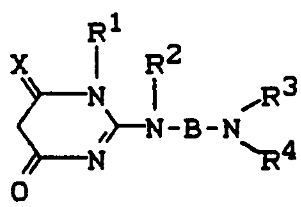

(VI),

wobei die Symbole die oben angegebene Bedeutung haben, erhalten.

Die Barbitursäuren der Formel (VI) erhält man in an sich bekannter Weise, z.B. nach "The Pyrimidines" in "The Chemistry of Heterocyclic Compounds" (A. Weißberger), 1962, S. 55-ff, durch Kondensation der Guanidine der Formel

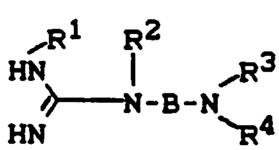

(VII)

oder deren Salzen mit Malonsäurederivaten der Formel

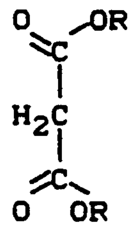

(VIIIa)

oder

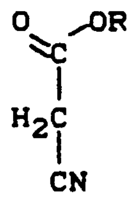

(VIIIb)

worin

R Alkyl ist.

Die Guanidine der Formel (VII) lassen sich nach an sich bekannten Methoden, die z.B. in Houben-Weyl, Bd. E4, S. 609 ff beschrieben sind, aus den Aminen der Formel

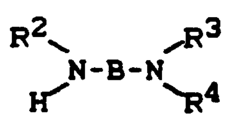

(IX)

und Guanidierungsmitteln herstellen.

Die Diazotierung der Amine (V) erfolgt in an sich bekannter Weise bei Temperaturen zwischen 0 und 50 °C, wobei beispielsweise folgende Mono-aminobenzole verwendet werden können:

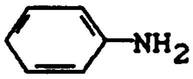 , 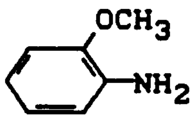 , 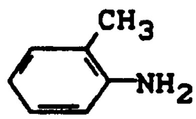 , 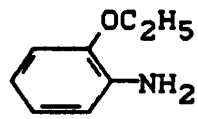 ,

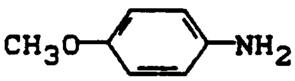 , 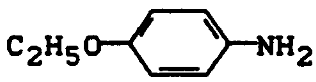 , 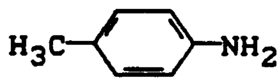 ,

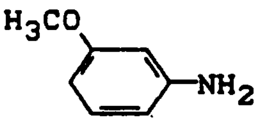 , 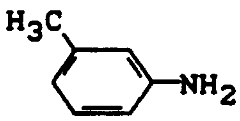 , 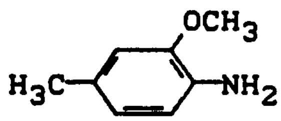 ,

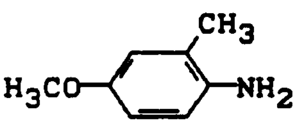 , 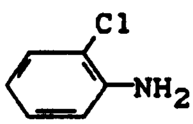 , 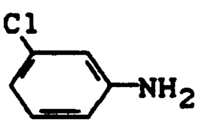 , 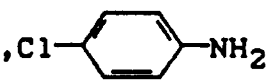 ,

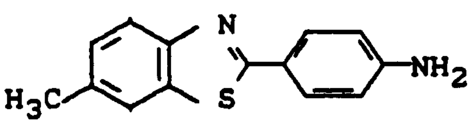 , 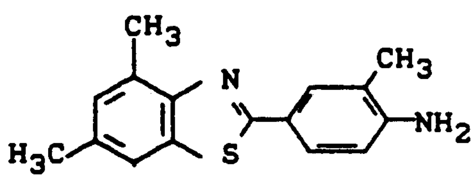 ,

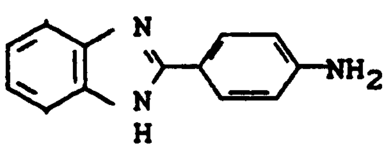 , 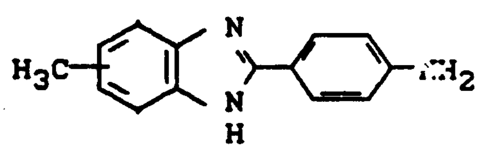 .

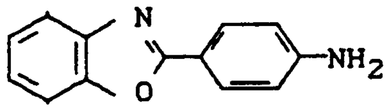 , 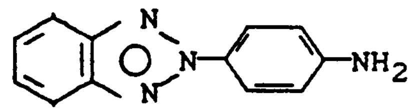 ,

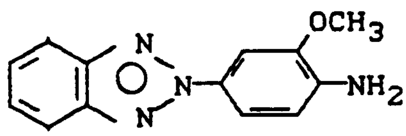 , 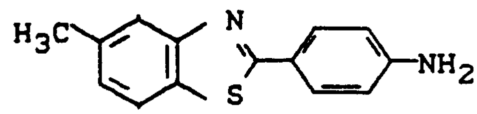 ,

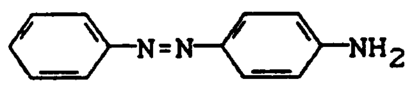 , 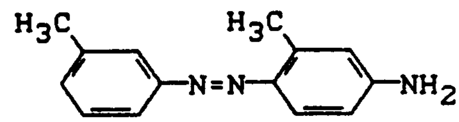 ,

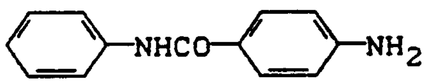 , 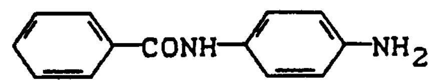 ,

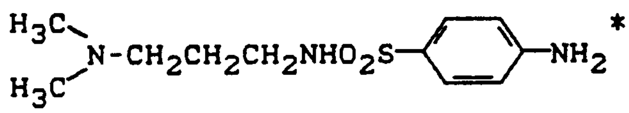 * ,

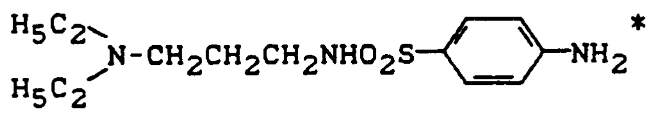 * ,

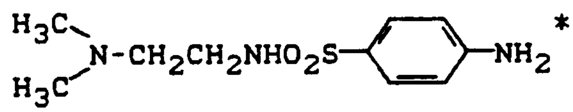 * ,

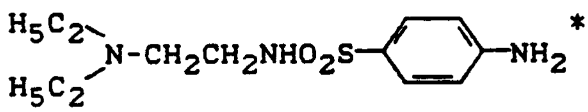 * ,

* und entsprechende m-Isomere

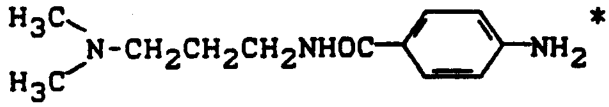 ,

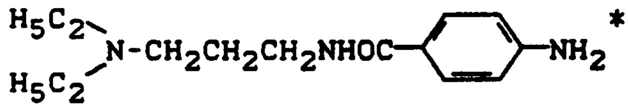 ,

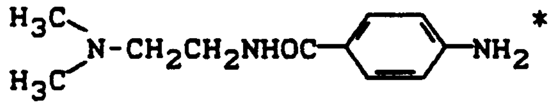 ,

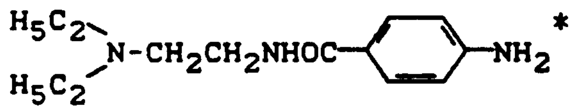 ,

* und entsprechende m-Isomere.

Als Diamine der allgemeinen Formel (V), kommen z.B. in Betracht:

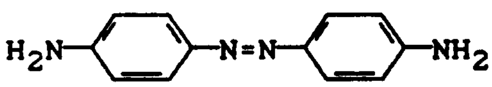 , 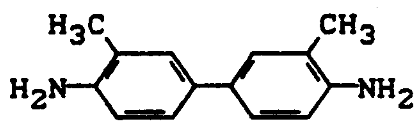 ,

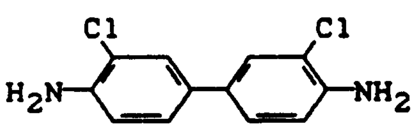 , 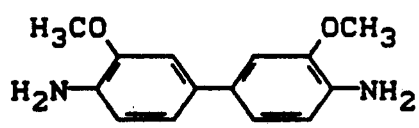 ,

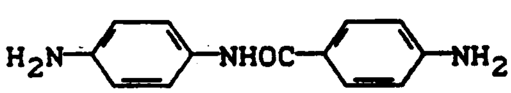 , 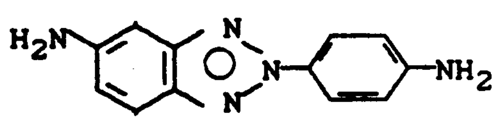 ,

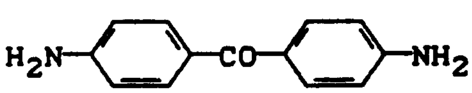 , 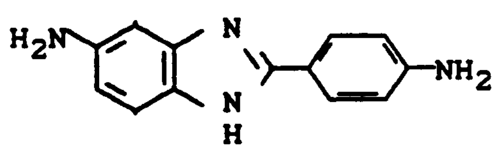 ,

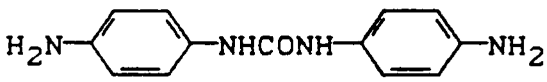 , 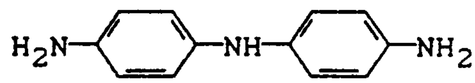 ,

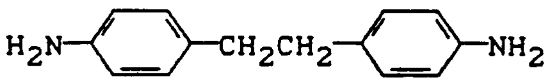 , 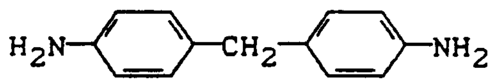 ,

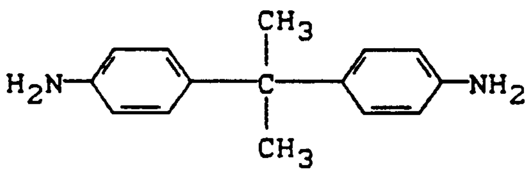 ,

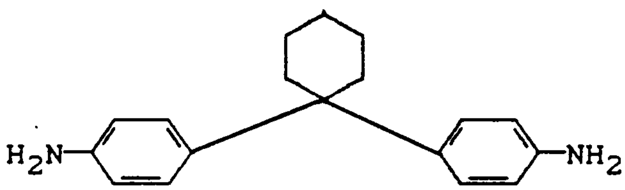 ,

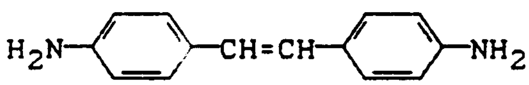 , 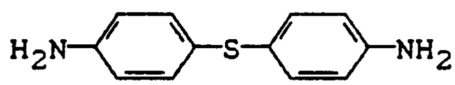 ,

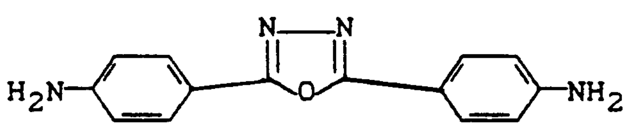 ,

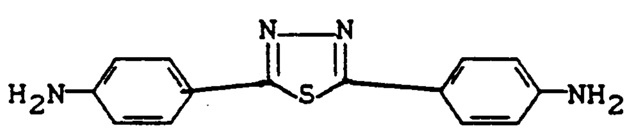 ,

Die Kupplung erfolgt üblicherweise bei Temperaturen zwischen 0 und 50 °C, vorzugsweise bei Temperaturen zwischen 0 und 30 °C bei pH-Werten zwischen 2 und 10, vorzugsweise zwischen 4 und 7. Die Farbstoffe können isoliert und getrocknet werden, sie können aber auch mit geeigneten Lösungsmitteln in stabile, konzentrierte Lösungen überführt werden.

Solche Lösungen sind z.B. wäßrige Lösungen von Mineralsäuren und/oder organischen Säuren, z.B. Salzsäure, Schwefelsäure, Phosphorsäure, Ameisensäure, Essigsäure, Glykolsäure, Milchsäure, Methansulfonsäure.

Als Lösungsmittel können aber auch organische Lösungsmittel wie z.B. Ethylenglykol, Diglykol, Triglykol, Glycerin, Ethylglykolmonomethylether, Diglykolmonoethylether, Diglykolmonobutylether u.ä. verwendet oder mit verwendet werden.

Die erfindungsgemäßen Farbstoffe färben basisch anfärbbare Materialien wie Polyacrylnitril, sauer modifizierten Polyester und Polyamid, Wolle und Leder, aber auch cellulosehaltige Materialien wie Baumwolle und Celluloseregenerat-Fasern, insbesondere Papier mit guten Echtheiten in gelben Tönen.

Die Farbstoffe können zum Papiermasse-Färben oder zur Papieroberflächenfärbung eingesetzt werden. Sie sind geeignet für geleimte und für ungeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 4 bis 8, insbesondere pH 5 bis 7. Die Färbetemperatur beträgt im allgemeinen 10° bis 50°C, vorzugsweise etwa 20°.

Die bei der Papierfärbung und -Herstellung üblichen Hilfsmittel und Füllstoffe können auch beim Einsatz der erfindungsgemäßen Farbstoffe mitverwendet werden. Die Farbstoffe besitzen bei der Papierfärbung ein ausgezeichnetes Ziehvermögen.

Die mit den erfindungsgemäßen Farbstoffen erhaltenen Papierfärbungen zeichnen sich durch gute Wasserechtheit (Ausblutechtheit) sowie Säure-, Alkali- und Alaun-Echtheit aus. Hervorzuheben ist die Brillanz und Klarheit der gelben Farbtöne. Ferner ist das Kombinationsverhalten mit geeigneten Farbstoffen sehr gut.

Aus der US 4,285,861 sind sulfogruppenhaltige Naphtho[1,2]triazolphenylazo-Barbitursäure-Derivate bekannt, die als Papierfarbstoffe geeignet sind.

Herstellung der Farbstoffe

Beispiel 1

0,072 Mol = 17,4 g (2-(4'-Aminophenyl)-6-methylbenzthiazol werden in 300 ml Wasser und 20 ml Salzsäure (36 Vol %) angerührt. Anschließend wird mit 50 ml 10 %iger Natriumnitrit-Lösung auf übliche Weise diazotiert. Man rührt 1 Stunde nach und zerstört überschüssiges Nitrit mit Amidosulfonsäure. Diese Diazotierungssuspension gibt man zu 217 ml ≙ 0,087 Mol einer neutralen wäßrigen Lösung von 2-(3-N,N-Dimethylaminopropyl)aminobarbitursäure (Gehalt: 0,04 Mol/100 ml). Man hält den pH-Wert mit wäßriger Natronlauge bei 6. Nach 3 Stunden wird der salzhaltige Farbstoff der Formel

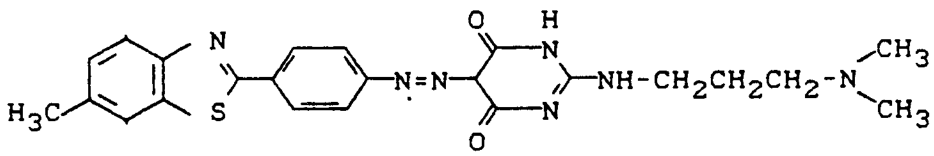

$\lambda_{max}$ : 420 nm

abgesaugt und getrocknet: Ausbeute: 90 % der Theorie.

Herstellung einer Farbstoff-Lösung:

40 g des salzhaltigen Farbtoffs aus Beispiel 1 werden in 100 ml Wasser und 60 ml 70 %iger Methansulfonsäure unter Rühren gelöst. Nach Abfiltrieren geringer Mengen ungelöster Bestandteile erhält man 218 g Farbstoff-Lösung.

Beispiel 2

Arbeitet man analog Beispiel 1, verwendet jedoch als Kupplungskomponente eine wäßrige Lösung von 2-(3-N-Morpholinopropyl)aminobarbitursäure, so erhält man den Farbstoff der Formel

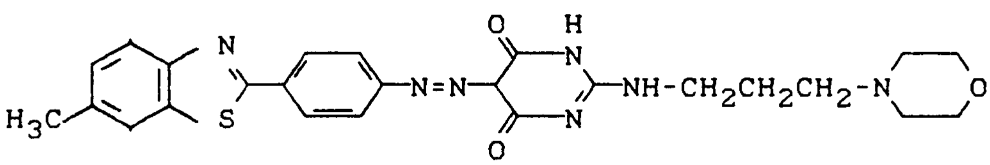

Ausbeute: 90% der Theorie; $\lambda_{max}$ (nm): 424

Analog erhält man bei Ersatz der in Beispiel 1 und 2 verwendeten Kupplungskomponenten durch in der nachstehenden Tabelle aufgeführten die Beispiele 3-8 der Formel

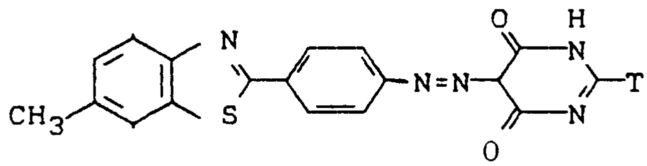

| Beispiel | T | Nuance auf Papier | $\lambda_{max}$ (nm) |
|---|---|---|---|
| 3 | 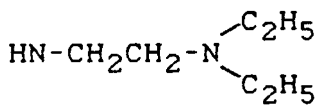 | gelb | 420 |
| 4 | 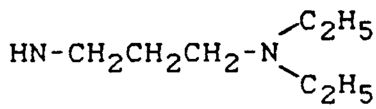 | gelb | 434 |
| 5 | 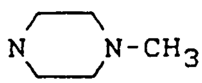 | gelb | 424 |
| 6 | 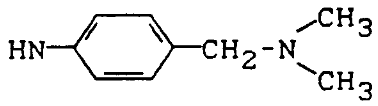 | gelb | 418 |
| 7 | 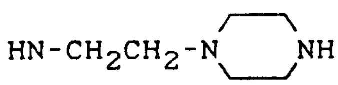 | gelb | 424 |
| 8 | $HN-CH_2CH_2CH_2CH_2-NH_2$ | gelb | 426 |

Beispiel 9

0,029 Mol = 5,71 g 4-Aminoazobenzol werden in 100 ml Wasser und 8 ml Salzsäure (36 Vol.%) verrührt. Nach Außenkühlung auf 0-5 °C werden 20 ml 10 Vol. %ige Natriumnitrit-Lösung zugetropft. Man läßt 2,5 Stunden nachrühren und zerstört die überschüssige salpetrige Säure mit Amidosulfonsäure. Diese Diazotierung gibt man zu 77 ml ≙ 0,030 Mol einer mit Eis auf 0 °C gekühlten neutralen wäßrigen Lösung von 2-(3-Morpholinopropyl)aminobarbitursäure (Gehalt 0,040 Mol/100 ml). Mit 40 Vol. %iger Natronlauge wird der pH-Wert bei 6 gehalten. Nach 6 Stunden wird der Farbstoff der Formel

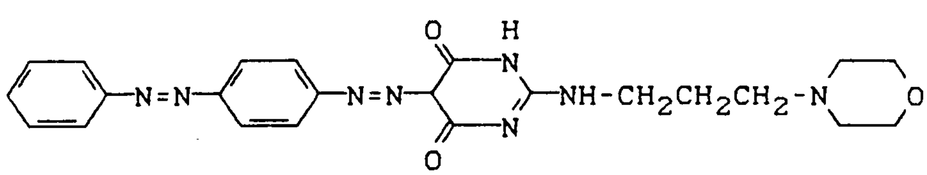

durch Absaugen isoliert. Ausbeute: 90 % der Theorie;
$\lambda_{max}$ (nm): 432.

Beispiel 10

0,014 Mol = 3,1 g 1,2-Bis(4-Aminophenyl)ethan werden in 80 ml Wasser und 8 ml Salzsäure (36 Vol.%) bei Raumtemperatur gelöst. Nach Außenkühlung mit Eis auf 0-5 °C werden innerhalb 0,5 Stunden 20 ml 10 Vol. %iger Natriumnitrit-Lösung zugetropft. Man rührt 1 Stunde bei 0-5 °C nach und zerstört überschüssiges Nitrit mit Amidosulfonsäure. Diese Diazotierung gibt man zu 77 ml ≙ 0,030 Mol einer mit Eis auf 0 °C gekühlten neutralen wäßrigen Lösung von 2-(3-N-Morpholinopropyl)aminobarbitursäure (Gehalt: 0,040 Mol/100 ml). Mit 40 Vol. %iger Natronlauge hält man den pH-Wert bei 6. Nach beendeter Kupplung wird der Farbstoff der Formel

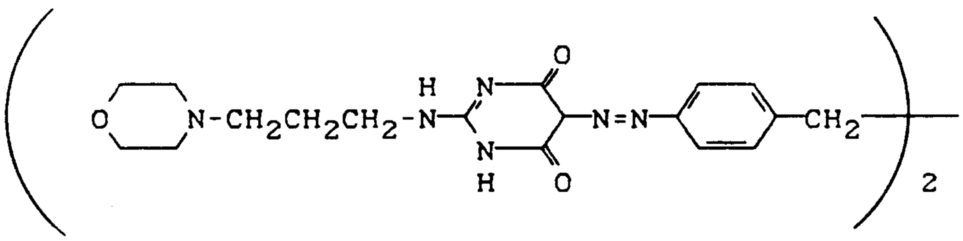

abgesaugt. Ausbeute: 88 % der Theorie;
$\lambda_{max}$ (nm): 416.

Beispiel 11

Ersetzt man in Beispiel 10 die Kupplungskomponente durch 2-(4-N,N-Dimethylaminomethylphenyl)-aminobarbitursäure, so erhält man den Farbstoff der Formel

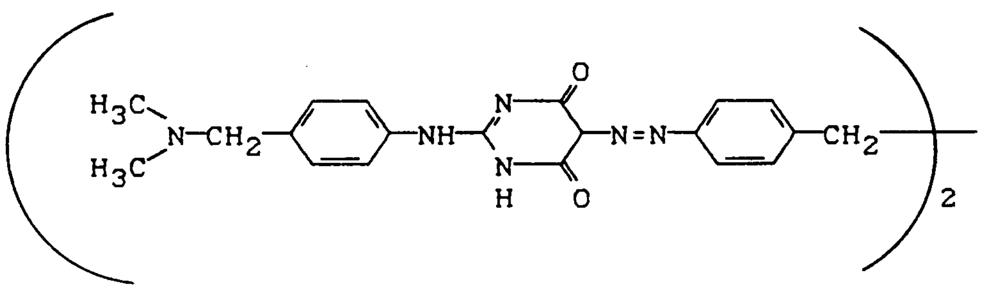

Ausbeute: 85 % der Theorie; $\lambda_{max}$ (nm): 408.

Beispiel 12

0,014 Mol = 3,4 g 4,4'-Diamino-N,N'-diphenylharnstoff werden in 100 ml Wasser und 8 ml Salzsäure (36 Vol. %) verrührt. Nach Zugabe von Eis versetzt man tropfenweise bei 0-5 °C mit 20 ml 10 Vol. %iger Natriumnitrit-Lösung. Man rührt 0,5 Stunden nach und zerstört die überschüssige salpetrige Säure mit wenig Amidosulfonsäure. Die Kupplung erfolgt mit der in Beispiel 10 angegebenen Kupplungskomponente unter den dort angegebenen Bedingungen. Man isoliert den Farbstoff der Formel

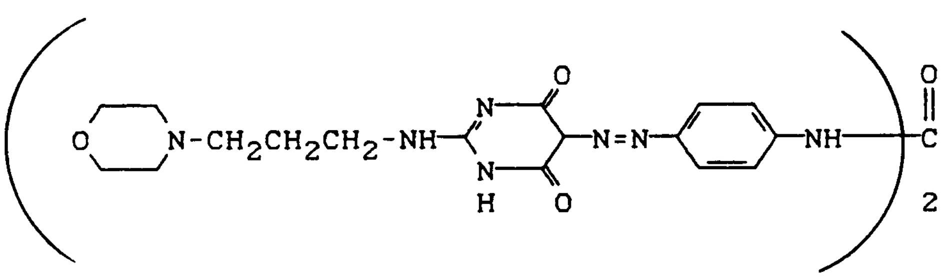

durch Absaugen.
Ausbeute: 85 % der Theorie; $\lambda_{max}$ (nm): 418.

Beispiel 13

0,014 Mol = 3,5 g 2,5-Bis(4-Aminophenyl)-1,3,4-oxadiazol werden wie die Tetraazokomponente des Beispiels 12 diazotiert. Die Kupplung auf die in Beispiel 10 angegebene Kupplungskomponente ergibt den Farbstoff der Formel

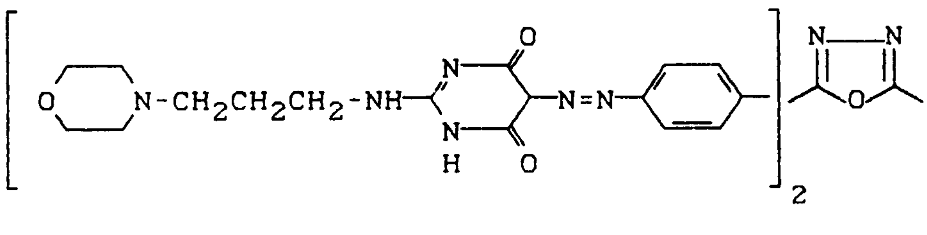

Ausbeute: 83 % der Theorie; $\lambda_{max}$ (nm): 420.

Beispiel 14

0,014 Mol = 3,4 g 2-(4-Amino-3-methoxyphenyl)-1,2,3-benztriazol werden in 100 ml Wasser und 4 ml Salzsäure (36 Vol. %) verrührt, mit Eis auf 0 °C gekühlt und durch Zugabe von 10 ml 10 Vol. %iger Natriumnitrit-Lösung. diazotiert. Man läßt 1 Stunde nachrühren und zerstört den Überschüß an salpetriger Säure mit wenig Amidosulfonsäure. Die Kupplung erfolgt auf die in Beispiel 10 verwendete Kupplungskomponente unter den dort angegebenen Bedingungen. Nach Absaugen erhält man den Farbstoff der Formel

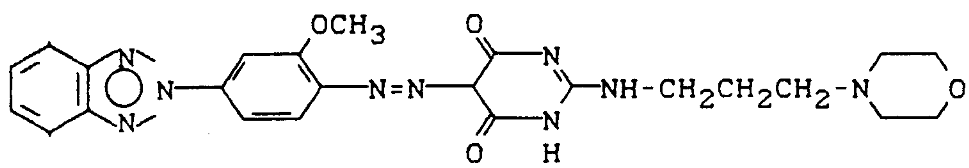

Ausbeute: 85 % der Theorie; $\lambda_{max}$ (nm): 448.

Beispiel 15

0,014 Mol = 3,1 g eines Gemisches aus 2-(4-Aminophenyl)-4-methylbenzimidazol und 2-(4-Aminophenyl)-5-methylbenzimidazol werden wie die Diazokomponente in Beispiel 14 diazotiert. Die Kupplung auf die dort verwendete Kupplungskomponente ergibt den Farbstoff der Formel

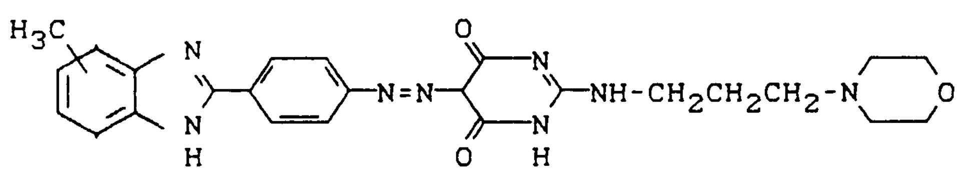

Ausbeute: 87 % der Theorie; $\lambda_{max}$ (nm): 418.

Beispiel 16

0,029 Mol = 3,1 g 4-Methylanilin werden in einem auf 0 °C gekühlten Gemisch aus 35 ml Wasser und 8 ml Salzsäure (36 Vol. %) mit 10 Vol. %iger Natriumnitrit-Lösung diazotiert. Nach Zerstörung des

Nitritüberschusses mit Amidosulfonsäure wird die Diazotierung zu 80 ml der in Beispiel 1 verwendeten Kupplungslösung gegeben. Man tropft 35 ml 20 Vol. %iger Natriumacetat-Lösung zu und saugt nach 6 Stunden nach Zugabe von 5 % Natriumchlorid den Farbstoff der Formel

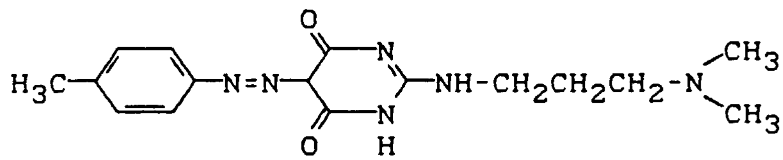

ab. Ausbeute: 92 % der Theorie; $\lambda_{max}$ (nm): 414.

Der Farbstoff färbt Polyacrylnitril in einem klaren Gelbton.

Beispiel 17

Ersetzt man in Beispiel 16 4-Methylanilin durch 4-Methoxyanilin und verfährt im übrigen genauso, so isoliert man den Farbstoff der Formel

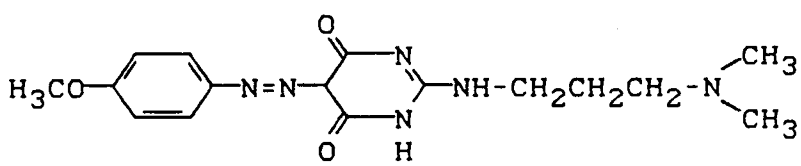

der Polyacrylnitril in klarem Gelbton färbt. Ausbeute: 90 % der Theorie; $\lambda_{max}$ (nm): 430.

Beispiel 18

Ersetzt man in Beispiel 1 die Kupplungskomponente durch 2-(3-N,N-Diethylaminopropyl)-amino-6-iminobarbitursäure und arbeitet im übrigen analog, so erhält man den Farbstoff der Formel

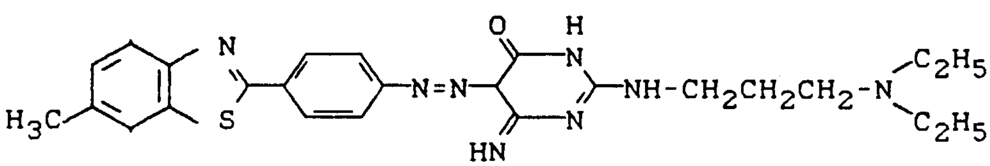

Ausbeute: 90 % der Theorie; $\lambda_{max}$ (nm): 434.

## Patentansprüche

**1.** Basische Azofarbstoffe der allgemeinen Formel

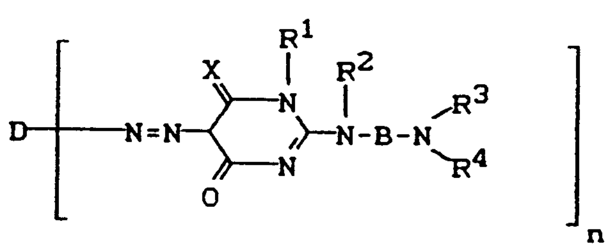

und deren Tautomere,

worin

D der Rest einer von anionischen Gruppen freien Diazo- und Tetrazokomponente,

X O oder NH,

$R^1$, $R^2$ unabhängig voneinander Wasserstoff, Alkyl oder Aryl,

B für gegenbenenfalls durch -O-, -S-,

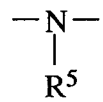

unterbrochenes $C_2$-$C_4$-Alkylen,

worin

$R_5$ für Wasserstoff, Methyl, gegebenenfalls durch Chlor, Brom, Hydroxy, Cyan, $C_1$-$C_4$-Alkoxy, Amino, Mono- und Di-$C_1$-$C_4$-alkylamino substituiertes $C_2$-$C_4$-Alkyl, durch Fluor, Chlor, Brom, $C_1$-$C_4$-Alkyl, $C_1$-$C_4$-Alkoxy substituiertes Aryl, vorzugsweise Phenyl steht,

oder

oder

B für $-CH_2CH_2CH_2-NH-CH_2CH_2CH_2-$ oder

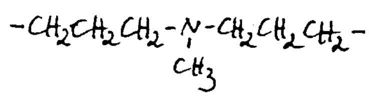

Steht,

oder

B für einen Rest der Formel

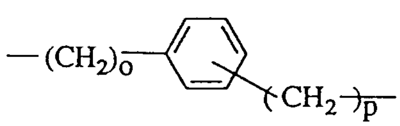

worin

o für 0, 1, 2 oder 3 und

p für 1, 2 oder 3 steht und

$$-(CH_2)_p-$$

an den Rest $NR^3R^4$ gebunden ist,

und der Phenylrest zusätzlich durch $C_1$-$C_4$-Alkyl, $C_1$-$C_4$-Alkoxy, Chlor oder Brom substituiert sein kann,

$R^3$, $R^4$ unabhängig voneinander Wasserstoff, Alkyl, Alkenyl oder Aralkyl sind, oder

$R^2$ und $R^3$ zusammen mit B und den beiden Stickstoffatomen, an die sie gebunden sind, einen 5- oder 6-gliedrigen Heterocyclus bilden, und in diesem Fall

B auch für eine direkte Bindung, $-CH_2$-oder $-CH_2-CH_2$- steht,

$R^3$ und $R^4$ gemeinsam mit dem Stickstoffatom, an das sie gebunden sind, einen 5- oder 6-gliedrigen Heterocyclus bilden,

n 1 oder 2 sind, und worin

die cyclischen und acyclischen Reste ihrerseits durch in der Farbstoffchemie übliche Reste substituiert sein können.

**2.** Basische Azofarbstoffe gemäß Anspruch 1 der allgemeinen Formel

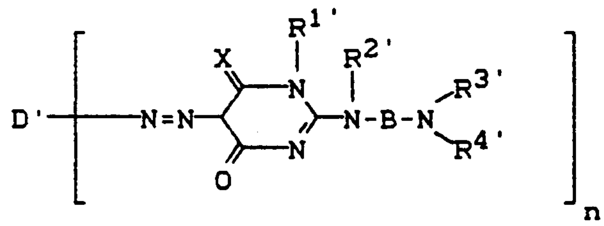

worin

n 1 oder 2 ist,

X O der NH,

D′ einen Rest der Formel

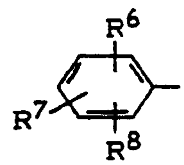

bedeutet, für den Fall, daß n = 1 ist
oder einen Rest der Formel

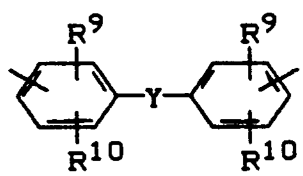

bedeutet, für den Fall, daß n = 2 ist,
worin

$R^6$ und $R^7$ unabhängig voneinander Wasserstoff, $C_1$-$C_4$-Alkyl, $C_1$-$C_4$-Alkoxy, Fluor, Chlor, Brom, durch Amino-, Mono- oder Di-$C_1$-$C_4$-alkylamino substituiertes $C_2$-$C_4$-Alkyl, $CONHR^{11}$ oder $SO_2NHR^{11}$

$R^{11}$ $C_1$-$C_4$-Alkyl, durch Amino-, Mono- oder Di-$C_1$-$C_4$-alkylamino , N-Pyrrolidin , N-Morpholin-, N-Piperazin-, N-Hexahydropyridazin-, N-Hexyhydropyrimidin substituiertes $C_2$-$C_4$-Alkyl sind,

$R^8$ unabhängig von $R^6$ und $R^7$ die dafür angegebene Bedeutung hat oder einen Rest der Formel

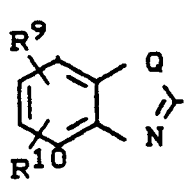

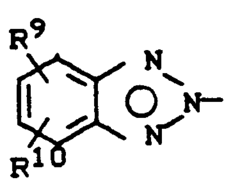

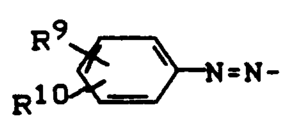

$R^9$ und $R^{10}$ unabhängig voneinander Wasserstoff, $C_1$-$C_4$-Alkyl, $C_1$-$C_4$-Alkoxy, Chlor oder Brom sind,

Q für O, S, NH und

Y für eine direkte Bindung oder -CONH-, -CO-, -NHCONH-, $-CH_2-$, $-CH_2CH_2-$, $-CH=CH-$, $-C(CH_3)_2-$,

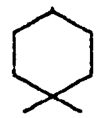,

-O-, -S-, -NH-, $>N-C_1-C_4$-Alkyl, -N=N-, -NHCOCH=CHCONH-, $-NHCOCH_2CH_2CONH-$,

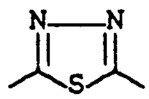, 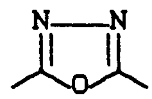

stehen,

$R^{1'}$ und $R^{2'}$ unabhängig voneinander Wasserstoff, gegebenenfalls durch Halogen, vorzugsweise Fluor, Chlor oder Brom, durch Hydroxy, $C_1-C_4$-Alkoxy, Cyan, Amino, Mono- oder Di-$C_1-C_4$-alkylamino substituiertes $C_1-C_4$-Alkyl, durch Fluor, Chlor, Brom, $C_1-C_4$-Alkyl, $C_1-C_4$-Alkoxy substituiertes Aryl, vorzugsweise Phenyl, sind

$R^{3'}$ und $R^{4'}$ unabhängig voneinander Wasserstoff, $C_1-C_4$-Alkyl, $C_3$- oder $C_4$-Alkenyl, Benzyl oder Phenylethyl sind, die durch Hydroxy, $C_1-C_4$-Alkoxy, Chlor, Brom oder Cyan und der Benzyl- und Phenylethylrest zusätzlich durch $C_1-C_4$-Alkyl substituiert sein können, sind,

oder

$R^{2'}$ und $R^{3'}$ zusammen mit B und den beiden Stickstoffatomen, an die sie gebunden sind, falls B für eine direkte Bindung steht, einen durch $C_1-C_4$-alkylsubstituierten Hexahydropyridazinring, falls B für $-CH_2-$ steht, einen durch $C_1-C_4$-alkylsubstituierten Hexahydropyrimidinring oder falls B für $-CH_2CH_2-$steht, einen durch $C_1-C_4$-alkylsubstiutierten Piperazinring bilden,

oder

$R^{3'}$ und $R^{4'}$ zusammen mit dem Stickstoffatom, an das sie gebunden sind, einen gegebenenfalls durch $C_1-C_4$-alkylsubstituierten Pyrrolidin-, Piperidin-, Morpholin-, Hexahydropyridazin-, Hexahydropyrimidin-oder Piperazinring bilden, wobei die Alkylsubstituenten zusätzlich durch Chlor, Brom, Hydroxy, Cyan, Amino, Mono- oder Di-$C_1-C_4$-alkylamino substituiert sein können,

B für gegebenenfalls durch -O-, -S-,

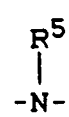

unterbrochenes $C_2-C_4$-Alkylen, worin $R^5$ für Wasserstoff, Methyl, gegebenenfalls durch Chlor, Brom, Hydroxy, Cyan, $C_1-C_4$-Alkoxy, Amino, Mono- und Di-$C_1-C_4$-alkylamino substituiertes $C_2-C_4$-Alkyl, durch Fluor, Chlor, Brom, $C_1-C_4$-Alkyl, $C_1-C_4$-Alkoxy substituiertes Phenyl, oder für den Rest

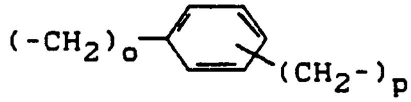

worin

o 0, 1, 2 oder 3 und

p 1, 2 oder 3 bedeuten und $(CH_2-)_p$ an den Rest $NR^3R^4$ gebunden ist, und der Benzolring durch $C_1$-$C_4$-Alkyl, $C_1$-$C_4$-Alkoxy, Chlor oder Brom substituiert sein kann,

oder für eine direkte Bindung oder $CH_2$, wenn $R^{2'}$ und $R^{3'}$ ringgeschlossen sind.

**3.** Basische Azofarbstoffe gemäß Anspruch 1 der allgemeinen Formel

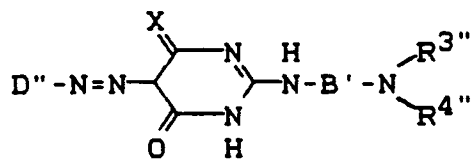

worin

| | |
|---|---|
| X | O oder NH, |
| D″ | einen Rest der Formel |

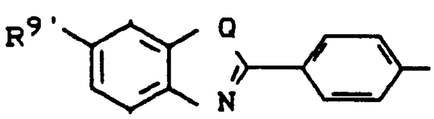

,

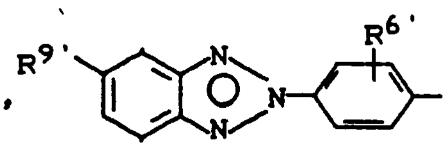

oder

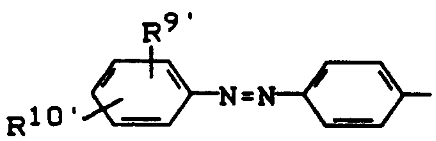

| | |
|---|---|
| $R^{6'}$, $R^{9'}$ und $R^{10'}$ | unabhängig voneinander Wasserstoff, Chlor, Brom, Methoxy, Ethoxy, Methyl oder Ethyl sind, |
| $R^{3''}$ und $R^{4''}$ | unabhängig voneinander $C_1$-$C_4$-Alkyl, $\beta$-oder $\gamma$-Hydroxy-$C_2$-$C_4$-alkyl oder Benzyl bedeuten, oder |
| $R^{3''}$ und $R^{4''}$ | zusammen mit dem Stickstoffatom, an das sie gebunden sind, einen Pyrrolidin-, Morpholin-, Piperidin- oder Piperazinring bilden, dessen terminales Stickstoffatom zusätzlich durch $\beta$-Hydroxyethyl substituiert sein kann, und |
| Q | O, S oder NH, |
| B′ | $-CH_2CH_2-$, $CH_2CH_2CH_2-$, $-CH(CH_3)CH_2-$, $-CH_2CH_2CH_2CH_2-$, |

bedeuten.

**4.** Basische Azofarbstoffe gemäß Anspruch 1 der allgemeinen Formel

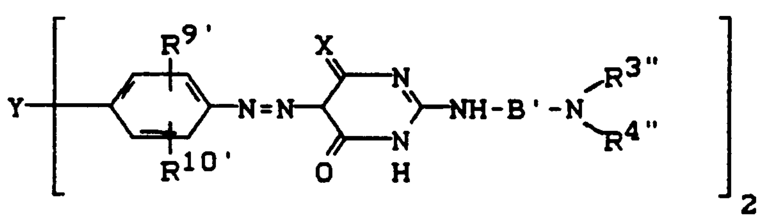

worin

$R^{3''}$ $R^{4''}$, $R^{9'}$, $R^{10'}$, B′, X und Y die oben angegebene Bedeutung haben.

**5.** Verfahren zur Herstellung von basischen Azofarbstoffen des Anspruchs 1, dadurch gekennzeichnet, daß man Amine der allgemeinen Formel

$D\text{-}(NH_2)_n$

diazotiert und mit Iminobarbitursäuren der allgemeinen Formel

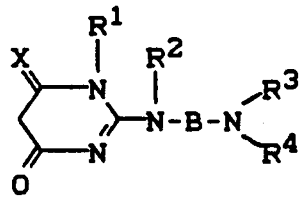

worin die Symbole die in Anspruch 1 angegebene Bedeutung haben, kuppelt.

**6.** Verfahren zum Färben von mit basischen Farbstoffen färbbaren Materialien, dadurch gekennzeichnet, daß man basische Azofarbstoffe des Anspruchs 1 verwendet.

**7.** Verfahren zum Färben von Papier, dadurch gekennzeichnet, daß man basische Azofarbstoffe des Anspruchs 1 verwendet.

## Claims

**1.** Basic azo dyestuffs of the general formula

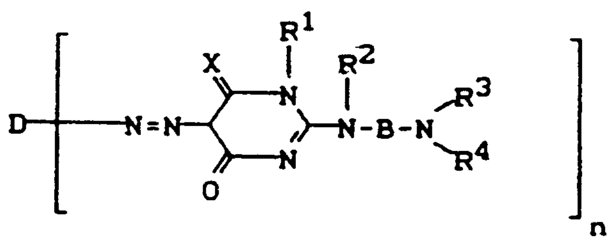

and tautomers thereof,
in which

| | |
|---|---|
| D | is the radical of a diazo or tetrazo component free of anionic groups, |
| X | is O or NH |
| $R^1$, $R^2$ | are independently of each other hydrogen, alkyl or aryl, |
| B | represents optionally -O-, -S- or |

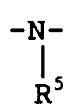

interrupted $C_2$-$C_4$-alkylene,

wherein

$R_5$ represents hydrogen, methyl, optionally chlorine-, bromine-, hydroxyl-, cyano-, $C_1$-$C_4$-alkoxy-, amino-, mono- and di-C,-$C_4$-alkylamino-substituted $C_2$-$C_4$-alkyl, fluorine-, chlorine-, bromine-, $C_1$-$C_4$-alkyl- or $C_1$-$C_4$-alkoxy-substituted aryl, preferably phenyl,

or

B represents $-CH_2CH_2CH_2\text{-}NH\text{-}CH_2CH_2CH_2-$ or

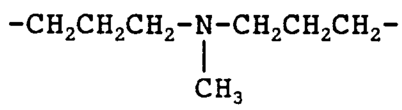

or

B represents a radical of the formula

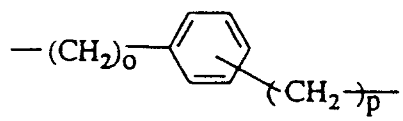

wherein

- o represents 0, 1, 2 or 3, and
- p represents 1, 2 or 3, and

$-(CH_2)-_p$ is bonded to the radical $NR^3R^4$, and the phenyl radical can be additionally substituted by $C_1$-$C_4$-alkyl,$C_1$-$C_4$-alkoxy, chlorine or bromine,

- $R^3$, $R^4$ are independently of each other hydrogen, alkyl, alkenyl or aralkyl, or
- $R^2$ and $R^3$ together with B and the two nitrogen atoms to which they are bonded form a 5- or 6-membered heterocyclic and in this case
- B also represents a direct bond $-CH_2-$ or $-CH_2-CH_2-$,
- $R^3$ and $R^4$ together with the nitrogen atom to which they are bonded form a 5- or 6-membered heterocyclic,
- n is 1 or 2, and in which

the cyclic and acyclic radicals can in turn be substituted by radicals customary in dyestuff chemistry.

**2.** Basic azo dyestuffs according to Claim 1 of the general formula

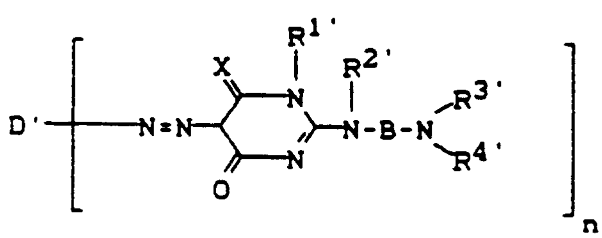

in which

- n is 1 or 2,
- X denotes O or NH,
- D' denotes a radical of the formula

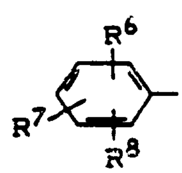

if n = 1

or a radical of the formula

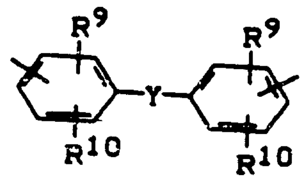

if n = 2,

in which

$R^6$ and $R^7$ are independently of each other hydrogen, $C_1$-$C_4$-alkyl, $C_1$-$C_4$-alkoxy, fluorine, chlorine, bromine, amino-, mono- or di-$C_1$-$C_4$-alkylamino-substituted $C_2$-$C_4$-alkyl, $CONHR^{11}$ or $SO_2NHR^{11}$,

$R^{11}$ is $C_1$-$C_4$-alkyl, or amino-, mono- or di-$C_1$-$C_4$-alkylamino-, N-pyrrolidine-, N-morpholine-, N-piperazine-, N-hexahydropyridazine-, N-hexahydropyrimidine-substituted $C_2$-$C_4$-alkyl,

$R^8$ has independently of $R^6$ and $R^7$ the meaning specified therefor or is a radical of the formula

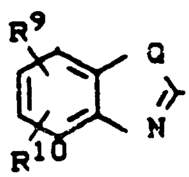 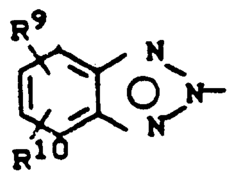 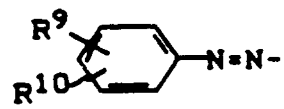

$R^9$ and $R^{10}$ are independently of each other hydrogen, $C_1$-$C_4$-alkyl, $C_1$-$C_4$-alkoxy, chlorine or bromine,

Q represents O, S or NH and

Y represents a direct bond or -CONH-, -CO-, -NHCONH-, $-CH_2-$, $-CH_2CH_2-$, -CH = CH-, $-C(CH_3)_2-$,

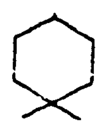 ,

-O-, -S-, -NH-, N-$C_1$-$C_4$-alkyl, -N = H-, -NHCOCH = CHCONH-, $-NHCOCH_2CH_2CONH-$,

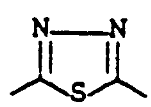 , 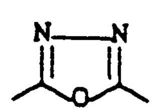

$R^{1'}$ and $R^{2'}$ are independently of each other hydrogen, optionally halogen-, preferably fluorine-, chlorine- or bromine-, hydroxyl-, $C_1$-$C_4$-alkoxy-, cyano-, amino-, mono- or di-$C_1$-$C_4$-alkylamino-substituted $C_1$-$C_4$-alkyl, fluorine-, chlorine-, bromine-, $C_1$-$C_4$-alkyl- or $C_1$-$C_4$-alkoxy-substituted aryl, preferably phenyl,

$R^{3'}$ and $R^{4'}$ are independently of each other hydrogen, $C_1$-$C_4$-alkyl, $C_3$- or $C_4$-alkenyl, benzyl or phenylethyl which each can be substituted by hydroxyl, $C_1$-$C_4$-alkoxy, chlorine, bromine or cyano and the benzyl and phenylethyl radicals additionally by $C_1$-$C_4$-alkyl,

or

$R^{2'}$ and $R^{3'}$ together with B and the two nitrogen atoms to which they are bonded form, if B represent a direct bond, a $C_1$-$C_4$-alkyl-substituted hexahydropyridazine ring, if B represents $-CH_2-$, a $C_1$-$C_4$-alkyl-substituted hexahydropyrimidine ring or, if B repre-

sents $-CH_2CH_2-$, a $C_1$-$C_4$-alkyl-substituted piperazine ring,

or

$R^{3'}$ and $R^{4'}$ together with the nitrogen atom to which they are bonded form an optionally $C_1$-$C_4$-alkyl-substituted pyrrolidine, piperidine, morpholine, hexahydropyridazine, hexahydropyrimidine or piperazine ring, where the alkyl substituents can additionally be substituted by chlorine, bromine, hydroxyl, cyano, amino, mono- or di-$C_1$-$C_4$-alkylamino,

B represents optionally -O-, -S-, or

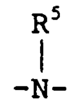

interrupted $C_2$-$C_4$-alkylene, in which $R^5$ represents hydrogen, methyl, optionally chlorine-, bromine-, hydroxyl-, cyano-, $C_1$-$C_4$-alkoxy-, amino-, mono- and di-$C_1$-$C_4$-alkylamino-substituted $C_2$-$C_4$-alkyl, or fluorine-, chlorine-, bromine-, $C_1$-$C_4$-alkyl- or $C_1$-$C_4$-alkoxy-substituted phenyl, or represents the radical

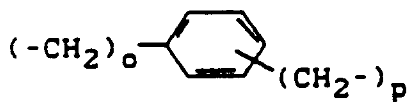

in which

o denotes 0, 1, 2 or 3 and

p denotes 1, 2 or 3 and $(CH_2-)_p$ is bonded to the radical $NR^3R^4$ and the benzene ring can be substituted by $C_1$-$C_4$-alkyl, $C_1$-$C_4$-alkoxy, chlorine or bromine,

or represents a direct bond or $CH_2$, if $R^{2'}$ and $R^{3'}$ are linked together to form a ring.

**3.** Basic azo dyestuffs according to Claim 1 of the general formula

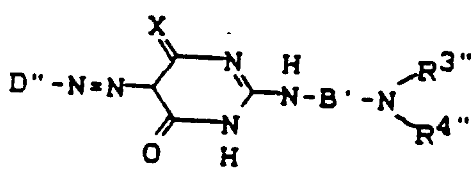

in which

X is O or NH,

D" is a radical of the formula

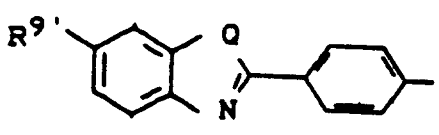

,

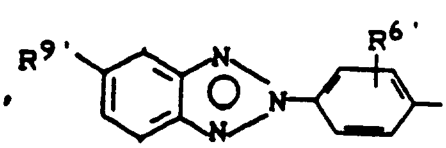

or

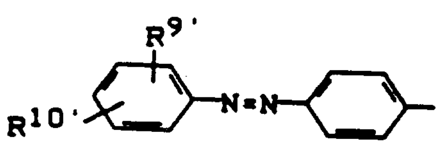

$R^{6'}$, $R^{9'}$ and $R^{10'}$ are independently of one another hydrogen, chlorine, bromine, methoxy, ethoxy, methyl or ethyl,

| | |
|---|---|
| $R^{3''}$ and $R^{4''}$ | are independently of each other $C_1$-$C_4$-alkyl, $\beta$- or $\gamma$-hydroxy-$C_2$-$C_4$-alkyl or benzyl, or |
| $R^{3''}$ and $R^{4''}$ | together with the nitrogen atom to which they are bonded form a pyrrolidine, morpholine, piperidine or piperazine ring whose terminal nitrogen atom can additionally be substituted by $\beta$-hydroxyethyl, and |
| Q | denotes O, S or NH |
| B' | denotes $-CH_2CH_2-$, $-CH_2CH_2CH_2-$, $-CH(CH_3)CH_2-$, $-CH_2CH_2CH_2CH_2-$. |

**4.** Basic azo dyestuffs according to Claim 1 of the general formula

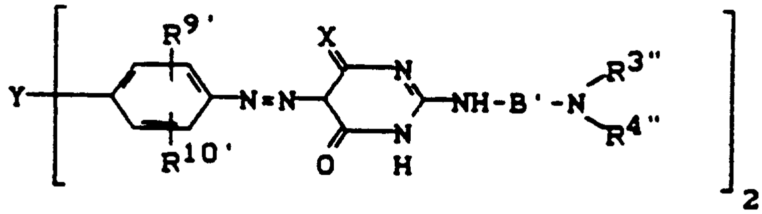

in which
$R^{3''}$, $R^{4''}$, $R^{9'}$, $R^{10'}$, B', X and Y have the abovementioned meaning.

**5.** Process for preparing basic azo dyestuffs of Claim 1, characterised in that amines of the general formula

$D$-$(NH_2)_n$

are diazotised and coupled with iminobarbituric acids of the general formula

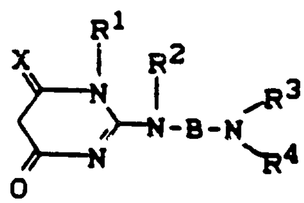

in which the symbols have the meaning specified in Claim 1.

**6.** Process for dyeing materials which are dyeable with basic dyestuffs, characterised in that basic azo dyestuffs of Claim 1 are used.

**7.** Process for colouring paper, characterised in that basic azo dyestuffs of Claim 1 are used.

## Revendications

**1.** Colorants azoïques basiques de formule générale

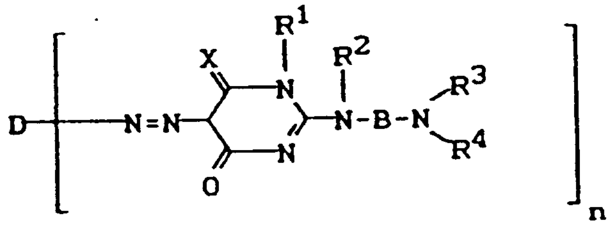

et leurs tautomères,
formule dans laquelle

- D  est le reste d'un composant diazoïque ou tétraazoïque dépourvu de groupes anioniques,
- X  représente O ou NH,
- $R^1$, $R^2$  représentent indépendamment l'un de l'autre l'hydrogène, un groupe alkyle ou aryle,
- B  est un groupe alkylène en $C_2$ à $C_4$ éventuellement interrompu par -O-, -S-,

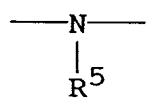

où

- $R^5$  représente l'hydrogène, un groupe méthyle, un groupe alkyle en $C_2$ à $C_4$ portant éventuellement un radical chloro, bromo, hydroxy, cyano, alkoxy en $C_1$ à $C_4$, amino, mono- et di(alkyle en $C_1$ à $C_4$)amino, un groupe aryle, de préférence phényle, portant le cas échéant un substituant fluoro, chloro, bromo, alkyle en $C_1$ à $C_4$, alkoxy en $C_1$ à $C_4$,

ou

- B  représente un groupe $-CH_2CH_2CH_2-NH-CH_2CH_2CH_2-$ ou

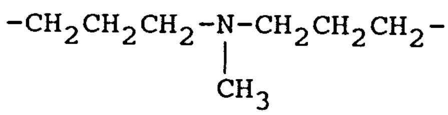

ou bien

- B  représente un reste de formule

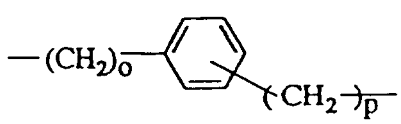

dans laquelle

- o  a la valeur 0, 1, 2 ou 3 et
- p  a la valeur 1, 2 ou 3 et
- $-(CH_2)_p$  est lié au reste $NR^3R^4$,

et le reste phényle peut en outre être substitué par un radical alkyle en $C_1$ à $C_4$, alkoxy en $C_1$ à $C_4$, du chlore ou du brome,

- $R^3$, $R^4$  représentent indépendamment l'un de l'autre l'hydrogène, un groupe alkyle, alcényle ou aralkyle, ou bien
- $R^2$ et $R^3$  forment conjointement avec B et les deux atomes d'azote auxquels ils sont liés, un

hétérocycle pentagonal ou hexagonal, et dans ce cas

B représente aussi une liaison directe, un groupe $-CH_2-$ ou $-CH_2-CH_2-$,

$R^3$ et $R^4$ forment, en commun avec l'atome d'azote auquel ils sont liés, un hétérocycle pentagonal ou hexagonal,

n a la valeur 1 ou 2,

et dans laquelle

les restes cycliques et acycliques peuvent être substitués quant à eux par des restes classiques de chimie tinctoriale.

**2.** Colorants azoïques basiques suivant la revendication 1, de formule générale

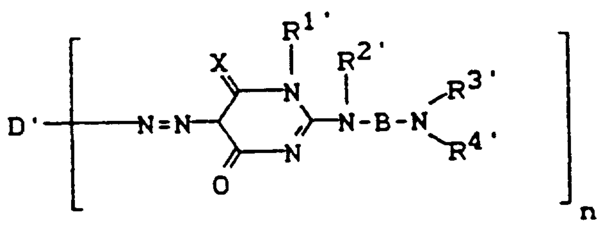

dans laquelle

n a la valeur 1 ou 2,

X représente O ou NH,

D' est un reste de formule

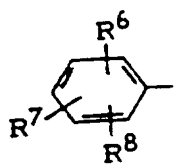

au cas où n est égal à 1, ou bien un reste de formule

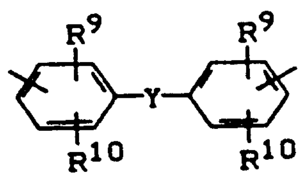

dans le cas où n est égal à 2,

formules dans lesquelles

$R^6$ et $R^7$ représentent indépendamment l'un de l'autre l'hydrogène, un groupe alkyle en $C_1$ à $C_4$, alkoxy en $C_1$ à $C_4$, le fluor, le chlore, le brome, un groupe alkyle en $C_2$ à $C_4$ portant un substituant amino, mono- ou di(alkyle en $C_1$ à $C_4$)amino, $CONHR^{11}$ ou $SO_2NHR^{11}$

$R^{11}$ est un groupe alkyle en $C_1$ à $C_4$, un groupe alkyle en $C_2$ à $C_4$ portant un substituant amino, mono- ou di(alkyle en $C_1$ à $c_4$)amino, N-pyrrolidine, N-morpholine, N-pipérazine, N-hexahydropyridazine, N-hexahydropyrimidine,

$R^8$ a indépendamment de $R^6$ et $R^7$ la définition indiquée pour eux ou représente un reste de formule

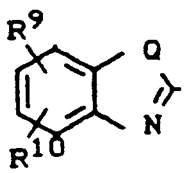 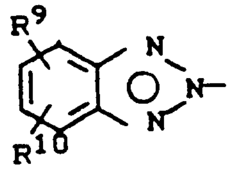 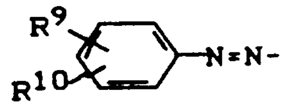

dans laquelle

$R^9$ et $R^{10}$ représentent indépendamment l'un de l'autre l'hydrogène, un groupe alkyle en $C_1$ à $C_4$, alkoxy en $C_1$ à $C_4$, du chlore ou du brome,

Q représente O, S, NH et

Y est une liaison directe ou un groupe -CONH-, -CO-, -NHCONH-, $-CH_2-$, $-CH_2CH_2-$, -CH = CH-, $-C(CH_3)_2-$,

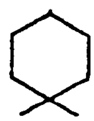 ,

-O-, -S-, -NH-, $\rangle$N- alkyle en $C_1$ à $C_4$ -N = N-, -NHCOCH = CHCONH-, $-NHCOCH_2CH_2CONH-$,

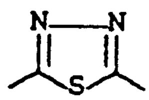 , 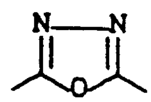

$R^{1'}$ et $R^{2'}$ représentent indépendamment l'un de l'autre l'hydrogène, un groupe alkyle en $C_1$ à $C_4$ éventuellement substitué par un halogène, de préférence le fluor, le chlore ou le brome, par un groupe hydroxy, alkoxy en $C_1$ à $C_4$, cyano, amino, mono- ou di(alkyle en $C_1$ à $C_4$)amino, un groupe aryle, de préférence phényle, substitué par du fluor, du chlore, du brome, un radical alkyle en $C_1$ à $C_4$, alkoxy en $C_1$ à $C_4$,

$R^{3'}$ et $R^{4'}$ représentent indépendamment l'un de l'autre l'hydrogène, un groupe alkyle en $C_1$ à $C_4$, alcényle en $C_3$ ou $C_4$, benzyle ou phényléthyle, qui peuvent être substitués par un radical hydroxy, alkoxy en $C_1$ à $C_4$, chloro, bromo, ou cyano, et les restes benzyle et phényléthyle pouvant en outre être substitués par un radical alkyle en $C_1$ à $C_4$

ou bien

$R^{2'}$ et $R^{3'}$ forment conjointement avec B et les deux atomes d'azote auxquels ils sont liés, au cas où B est une liaison directe, un noyau hexahydropyridazine portant un substituant alkyle en $C_1$ à $C_4$, au cas où B représente un groupe $-CH_2-$, un noyau hexahydropyrimidine substitué par un radical alkyle en $C_1$ à $C_4$, ou au cas où B représente un groupe $-CH_2CH_2-$, un noyau pipérazine portant éventuellement un substituant alkyle en $C_1$ à $C_4$,

ou bien

$R^{3'}$ et $R^{4'}$ forment conjointement avec l'atome d'azote auquel ils sont liés un noyau pyrrolidine, pipéridine, morpholine, hexahydropyridazine, hexahydropyrimidine ou pipérazine, portant éventuellement un substituant alkyle en $C_1$ à $C_4$, les substituants alkyle pouvant en outre être substitués par du chlore, du brome, un radical hydroxy, cyano, amino, mono- ou di(alkyle en $C_1$ à $C_4$)amino,

B est un groupe alkylène en $C_2$ à $C_4$ éventuellement interrompu par -O-, -S-,

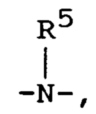

où $R^5$ représente l'hydrogène, un groupe méthyle, un groupe alkyle en $C_2$ à $C_4$ portant éventuellement un substituant chloro, bromo, hydroxy, cyano, alkoxy en $C_1$ à $C_4$, amino, mono- et di(alkyle en $C_1$ à $C_4$)amino, un groupe phényle portant éventuellement un substituant fluoro, chloro, bromo, alkyle en $C_1$ à $C_4$, alkoxy en $C_1$ à $C_4$, ou le reste

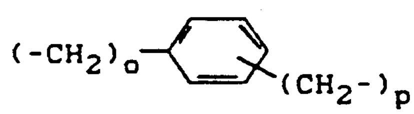

dans lequel

- o a la valeur 0, 1, 2 ou 3 et
- p a la valeur 1, 2 ou 3 et $(CH_2\text{-})_p$ est lié au reste $NR^3R^4$, et le noyau benzénique peut être substitué par un radical alkyle en $C_1$ à $C_4$, alkoxy en $C_1$ à $C_4$, du chlore ou du brome,

ou bien une liaison directe ou un groupe $CH_2$, lorsque $R^{2'}$ et $R^{3'}$ sont cyclisés.

**3.** Colorants azoïques basiques suivant la revendication 1, de formule générale

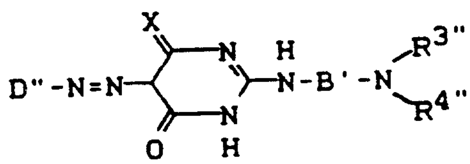

dans laquelle

| | |
|---|---|
| X | représente O ou NH, |
| D'' | est un reste de formule |

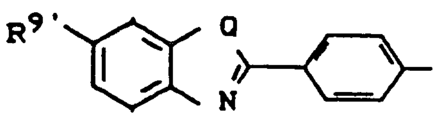 , 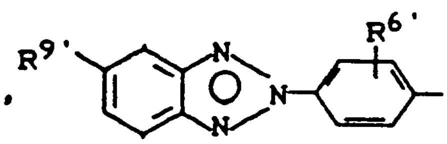 ou

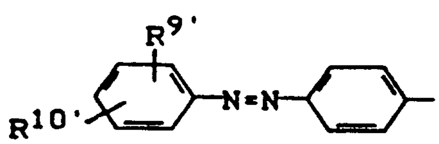

| | |
|---|---|
| $R^{6'}$, $R^{9'}$ et $R^{10'}$ | représentent indépendamment les uns des autres l'hydrogène, le chlore, le brome, un groupe méthoxy, éthoxy, méthyle ou éthyle, |
| $R^{3''}$ et $R^{4''}$ | représentent indépendamment l'un de l'autre un groupe alkyle en $C_1$ à $C_4$, $\beta$- ou $\gamma$-hydroxy(alkyle en $C_2$ à $C_4$) ou benzyle, ou bien |
| $R^{3''}$ et $R^{4''}$ | forment conjointement avec l'atome d'azote auquel ils sont liés un noyau pyrrolidine, morpholine, pipéridine ou pipérazine dont l'atome terminal d'azote peut en outre être substitué par un groupe $\beta$-hydroxyéthyle, et |
| Q | représente O, S ou NH, |
| B' | représente $-CH_2CH_2-$, $CH_2CH_2CH_2-$, $-CH(CH_3)CH_2-$, $-CH_2CH_2CH_2CH_2-$, |

**4.** Colorants azoïques basiques suivant la revendication 1, de formule générale

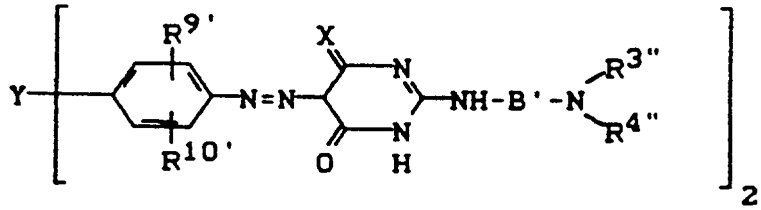

dans laquelle
$R^{3''}$, $R^{4''}$, $R^{9'}$, $R^{10'}$, B', X et Y ont la définition indiquée ci-dessus.

**5.** Procédé de production de colorants azoïques basiques suivant la revendication 1, caractérisé en ce qu'on diazote des amines de formule générale

$D\text{-}(NH_2)_n$

et on les fait copuler avec des acides iminobarbituriques de formule générale

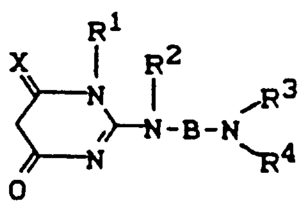

dans laquelle les symboles ont la définition indiquée dans la revendication 1.

**6.** Procédé de teinture de matières pouvant être teintes avec des colorants basiques, caractérisé en ce qu'on utilise des colorants azoïques basiques suivant la revendication 1.

**7.** Procédé pour la coloration de papier, caractérisé en ce qu'on utilise des colorants azoïques basiques suivant la revendication 1.